# FASCICULE DE BREVET EUROPEEN

(11) **EP 3 263 675 B1**
(45) Date de publication et mention de la délivrance du brevet: **18.03.2020**
(21) Numéro de dépôt: 17177472.2
(22) Date de dépôt: 22.06.2017
(51) Int. Cl.: C10L 1/02, C11B 3/04, C11B 3/06

(54) **COMPOSITION COMBUSTIBLE ISSUE DE LA BIOMASSE, SON PROCÉDÉ DE PRÉPARATION ET DE COMBUSTION**
KRAFTSTOFFZUSAMMENSETZUNG AUS BIOMASSE, UND IHR ZUBEREITUNGS- UND VERBRENNUNGSVERFAHREN
BIOMASS FUEL COMPOSITION AND METHOD FOR PREPARING AND COMBUSTING THE SAME

(30) Priorité: 28.06.2016 FR 1656029
(43) Date de publication de la demande: 03.01.2018
(73) Titulaire: Total Marketing Services, 92800 Puteaux (FR)
(72) Inventeur: HAVIL, Patrick, 92100 Boulogne Billancourt (FR); JULIEN, Laurent, 69530 Brignais (FR)
(74) Mandataire: Fédit-Loriot

(56) Documents cités:
- EP-A1- 0 542 616
- WO-A1-2008/076456
- WO-A1-2009/106696
- WO-A1-2013/098524
- WO-A1-2014/102492
- US-A- 4 326 854
- US-A1- 2006 021 276

## Description

### DOMAINE TECHNIQUE

La présente invention concerne une composition combustible issue de la biomasse, notamment de la biomasse liquide, et un procédé de préparation de cette composition combustible.

La combustion combustible comprend une huile acide et de l'huile de tall.

La composition combustible de la présente invention est plus particulièrement adaptée pour une utilisation dans des installations de combustion consommant exclusivement, seuls ou en mélange, du gaz naturel, des gaz de pétrole liquéfiés, du fioul domestique, du charbon, des fiouls lourds, de la biomasse. Il ne s'agit donc pas d'un carburant.

Notamment, la composition combustible de la présente invention peut être utilisée dans les installations de combustion classées dans la rubrique 2910 A (et à fortiori 2910 B et 2910 C) de la nomenclature des installations classées pour la protection de l'environnement (nomenclature ICPE) définie dans le décret n° 2013-814 du 11 septembre 2013, publié dans le journal Officiel de la République Française du 13 septembre 2013.

### ART ANTERIEUR

L'industrie du raffinage de pétrole, au moins en Europe de l'ouest, a tendance à diminuer la production de fioul lourd, en raison de la baisse de la demande. Cette baisse est liée au passage à des sources d'énergie alternatives par les clients, notamment du gaz naturel, ainsi qu'aux contraintes environnementales qui tendent à limiter les quantités de NOx, SO₂ et poussières émises dans l'atmosphère. Pour être en adéquation avec les prescriptions réglementaires les plus sévères, les installations de combustion de forte puissance devraient recourir à un fioul exempt d'azote, soufre et cendres ou à des techniques de traitement de fumées, ce qui n'est pas viable économiquement par rapport à d'autres énergies, telles que le gaz naturel par exemple.

De plus, le fioul lourd nécessite généralement d'être stocké à une température voisine de 50°C afin de le rendre pompable et d'être pulvérisé à une température comprise entre 85 et 130°C selon la technologie des brûleurs, en lien avec la viscosité du produit. Ces étapes de chauffage représentent une consommation énergétique non négligeable.

En outre, le point éclair du fioul lourd (typiquement compris entre 70 et 120°C) proche de sa température de mise en œuvre, peut engendrer des contraintes supplémentaires en termes de sécurité (atmosphères explosives).

Il existe donc un besoin pour un combustible de substitution du fioul lourd qui soit moins contraignant lors de sa mise en œuvre et qui permette d'atteindre les exigences de plus en plus élevées relatives aux émissions atmosphériques résultant de sa combustion.

Il existe des compositions combustibles à base de fioul lourd et de produits élaborés à partir de la biomasse, tel que par exemple les compositions combustibles élaborées par la demanderesse et décrites dans les documents WO2013/098524 et WO2014/102492. Les compositions combustibles décrites dans WO2013/098524 sont un mélange de fioul lourd et d'huile de tall ou d'une huile de neutralisation (composition d'acides gras neutralisés par une base puis acidifiés), l'huile de tall et l'huile de neutralisation permettant de stabiliser la composition combustible. Les compositions décrites dans WO2014/102492 sont des mélanges d'une pâte de neutralisation et d'un combustible lourd d'origine pétrolière. Ces différentes compositions combustibles ne sont cependant pas entièrement issues de la biomasse.

Il existe un besoin pour un combustible de substitution du fioul lourd qui soit moins contraignant lors de sa mise en œuvre, qui permette d'atteindre les exigences de plus en plus élevées relatives aux émissions atmosphériques résultant de sa combustion et qui soit entièrement issu de la biomasse.

### BREF RESUME DE L'INVENTION

La demanderesse propose une composition, notamment liquide, utilisée comme combustible. Cette composition peut se substituer à un fioul, notamment pour être brûlée dans une chaudière industrielle ou un four industriel en lieu et place d'un fioul. La demanderesse propose, en particulier, une composition combustible, notamment liquide, directement issue de la biomasse et pouvant se substituer à un fioul, notamment pour être brûlée dans une chaudière industrielle ou un four industriel en lieu et place d'un fioul. On entend par « directement issue de la biomasse », le fait qu'elle ne contient pas de combustible fossile. Cela n'exclut pas le fait que cette composition puisse contenir d'autres produits, par exemple des additifs, non issus de la biomasse.

Un premier objet de l'invention concerne ainsi une composition combustible liquide, comprenant de 30 à 90% massique d'une huile acide issue de l'acidification d'une pâte de neutralisation obtenue par un procédé de saponification d'une ou plusieurs huiles choisie(s) parmi une huile végétale et une huile animale, et de 10 à 70% massique d'une composition comprenant de la poix d'huile de tall, cette composition comprenant de 50 à 90% massique de la poix d'huile de tall, et le complément à 100% d'un ou plusieurs solvants.

Une telle composition présente l'avantage d'être issue uniquement de la biomasse : elle ne comprend pas de composants combustibles fossiles. Elle présente également l'avantage d'émettre lors de sa combustion des émissions faibles, respectant des contraintes environnementales élevées.

Par composition à base de poix d'huile de tall, on entend une composition comprenant de la poix d'huile de tall.

La composition combustible selon l'invention peut comprendre :
- au moins 50% massique d'huile acide, voire au moins 60% massique,
- au plus 50% massique de la composition à base de poix d'huile de tall, voire au plus 40% massique, de préférence au plus 30% massique.

Avantageusement, la composition combustible peut comprendre :
- de 50 à 85% massique d'huile acide, de préférence de 60 à 80% massique,
- de 15 à 50% massique de la composition à base de poix d'huile de tall, de préférence de 20 à 40% massique, plus préférentiellement de 20 à 30% massique.

La composition combustible selon l'invention peut en outre comprendre un ou plusieurs additifs, de préférence choisis parmi :
- un additif de combustion ayant pour effet de diminuer les émissions de poussières ; ce sont généralement des additifs contenant des sels de métaux (fer ou/et calcium ou/et cérium) solubilisés dans une matrice d'acides gras et d'hydrocarbures,
- un additif ayant pour effet d'améliorer la stabilité ; ces additifs contiennent généralement des agents dispersant solubilisés dans une matrice d'acides gras et d'hydrocarbures.

La teneur totale en additif de la composition combustible peut être de 0,05 à 0,5% poids, de préférence de 0,1 à 0,3% poids.

L'huile acide présente dans la composition combustible peut avantageusement présenter une teneur en eau inférieure ou égale à 1% poids, voire inférieure ou égale à 0,8% poids, en particulier de 0,1% à 0,7% en poids. Ceci peut permettre d'améliorer le rendement de combustion de la composition.

En variante ou en combinaison, l'huile acide présente dans la composition combustible peut avantageusement présenter une teneur en:
- cendres inférieure ou égale à 0,1% poids, idéalement inférieure à 0,05% poids,
- soufre inférieure ou égale à 150 mg/kg, de préférence inférieure à 100 mg/kg,
- calcium inférieure ou égale à 5 mg/kg, de préférence inférieure à 1 mg/kg,
- phosphore inférieure ou égale à 150 mg/kg,
- sodium inférieure ou égale à 10mg/kg, de préférence inférieure à 1mg/kg.

Selon des formes avantageuses, la teneur en cendres peut être inférieure ou égale à 0,04% poids.

Avantageusement, l'huile acide peut en outre comprendre une teneur en métaux alcalins autres que le sodium inférieure ou égale à 1 mg/kg.

La composition à base de poix d'huile de tall utilisée dans la présente composition comprend de 50 à 90% massique de poix d'huile de tall, de préférence de 60 à 80% massique, et le complément à 100% d'un ou plusieurs solvants, optionnellement choisis parmi une huile légère de pin, l'essence de térébenthine, et de manière générale les produits issus de la distillation de l'huile de tall brute.

L'huile légère de pin peut être définie comme une fraction légère récupérée en tête de colonne lors de la distillation de l'huile de tall brute. Son point éclair est compris entre 40 et 70°C (bornes incluses).

La poix d'huile de tall est le produit récupéré en fond de colonne lors du fractionnement de l'huile de tall brute par distillation.

La composition combustible selon l'invention peut comprendre au moins une des caractéristiques suivantes :
- un point éclair supérieur ou égal à 100°C, de préférence supérieur ou égale à 110°C,
- un indice d'acide inférieur ou égal à 70mgKOH/g, de préférence inférieur ou égale à 60mgKOH/g, préférentiellement inférieur ou égal à 50mgKOH/g,
- une teneur en cendres inférieure ou égale à 0,1% poids, de préférence inférieure ou égale à 0,05% poids,
- une teneur en soufre inférieure ou égale à 0,5% poids, de préférence inférieure ou égale à 0,1% poids,
- une teneur en azote inférieure ou égale à 0,1% poids, de préférence inférieure ou égale à 0,05% poids,
- une teneur en eau inférieure ou égale à 0,5% poids, de préférence inférieure ou égale à 0,2% poids.

Selon un mode de réalisation particulier, la composition combustible est constituée uniquement de l'huile acide et de la composition à base de poix d'huile de tall tels que décrits précédemment et éventuellement d'un ou de plusieurs additifs tels que décrits précédemment. Avantageusement, la composition combustible est constituée uniquement d'huile acide et de la composition à base de poids.

La composition combustible de la présente invention est susceptible d'être obtenue par le procédé de préparation décrit ci-après.

Un autre objet de l'invention est un procédé de préparation d'une composition combustible liquide, issue de la biomasse comprenant :
a) une étape de fourniture d'une huile acide issue de l'acidification d'une pâte de neutralisation obtenue par un procédé de saponification, d'une ou plusieurs huiles choisie(s) parmi une huile végétale et/ou une huile animale,
b) une étape de fourniture d'une composition à base de poix d'huile de tall, comprenant: b1) une étape de fourniture de 50 à 90% massique de poix d'huile de tall, b2) une étape de mélange de la poix d'huile de tall obtenue à l'étape b1) avec au moins un solvant pour obtenir le complément à 100%,
c) une étape de mélange de 30 à 90% massique de l'huile acide obtenue à l'étape a) avec 10 à 70% massique de la composition obtenue à l'étape b),
d) optionnellement au moins une étape de traitement comprenant une ou plusieurs étapes choisie(s) parmi une filtration, une centrifugation et une décantation, dans laquelle on traite une substance choisie parmi l'huile acide obtenue à l'étape a) avant l'étape c) de mélange, la composition à base de poix d'huile de tall obtenue à l'étape b) avant l'étape c) de mélange et le mélange obtenu à l'étape c). Le traitement peut ainsi se faire soit sur un composant du mélange, soit les deux, mais aussi sur le mélange.

L'étape de traitement peut notamment permettre de réduire la teneur en eau et/ou en en cendres, soufre, et autres éléments tels que métaux alcalins, phosphore, sodium de la substance traitée.

Un autre objet de l'invention concerne un procédé de combustion d'une composition combustible dans une installation de combustion, notamment de type 2910A ou 2910B ou 2910C selon la nomenclature ICPE, dans laquelle on brûle en tant que combustible, la composition combustible selon l'invention ou directement obtenue par le procédé selon l'invention. La composition selon l'invention peut brûler en respectant les contraintes réglementaires à l'émission sans nécessiter de recours à de coûteux traitements de fumées.

### DESCRIPTION DETAILLEE DE L'INVENTION

### Etape a) de fourniture d'une huile acide

L'huile acide fournie à l'étape a) est issue du raffinage d'une ou plusieurs huiles choisie(s) parmi une huile végétale et/ou une huile animale.

Il s'agit notamment d'une huile issue de l'acidification d'une pâte de neutralisation, cette pâte de neutralisation étant issue du raffinage, notamment du raffinage chimique, d'une ou plusieurs huiles choisie(s) parmi une huile végétale et/ou une huile animale. Plus particulièrement, la pâte de neutralisation est de préférence issue, notamment directement, d'un procédé de saponification d'une ou plusieurs huiles.

Une huile acide peut être définie comme étant des compositions d'acides gras neutralisés par une base puis acidifiés.

Les acides gras proviennent avantageusement de la saponification d'une huile végétale et/ou animale, telle que, sans être limitatif, une huile de tournesol, de soja, de colza, de palme, de coprah, d'arachide, d'olive, une huile de poisson, et comprenant classiquement en très grande majorité des chaînes carbonées en C₁₆-C₁₈, saturées ou insaturées, parmi lesquelles de préférence des chaînes carbonées insaturées en C₁₈. Les huiles végétales comprennent habituellement de l'acide palmitique, oléique, linoléique et d'autres acides en plus faibles quantités. Les compositions d'acides gras neutralisés par une base sont typiquement des pâtes de neutralisation.

Typiquement, une huile acide contient de 20 à 70% en poids d'acides gras. Le reste est composé majoritairement de mono-, di- et - triglycérides, en général essentiellement des triglycérides. On note également la présence de quelques impuretés en une teneur inférieure ou égale à 0,5% en masse, de préférence inférieure ou égale à 0,1% en masse. Ces impuretés sont des sels métalliques, par exemple des sulfates, phosphates,...

L'étape a) peut notamment comprendre la fourniture d'une huile acide ayant une teneur en eau inférieure à inférieure ou égale à 3 % poids.

L'étape a) de fourniture d'une huile acide peut avantageusement comprendre :
a1) une étape d'extraction des acides gras présents dans une pâte de neutralisation issue du raffinage, de préférence du raffinage chimique, notamment de la saponification, d'une ou plusieurs huiles choisie(s) parmi une huile végétale et/ou une huile animale, cette étape d'extraction étant réalisée en milieu acide dans des conditions efficaces pour former une phase aqueuse et une phase organique comprenant lesdits acides gras,
a2) une étape de séparation au cours de laquelle on sépare ladite phase organique précédemment formée et on la récupère.

La phase organique récupérée à l'étape a2) constitue une huile acide. Cette huile acide présente généralement une teneur en eau inférieure ou égale à 3% poids.

### Pâte de neutralisation utilisée lors de l'étape a1)

La pâte de neutralisation traitée à l'étape a1) peut être un mélange de pâtes de neutralisation issues du raffinage de différentes huiles ou peut être une pâte de neutralisation issue du raffinage d'une unique huile. De préférence, le raffinage de la ou des pâtes de neutralisation est un raffinage chimique.

De telles pâtes de neutralisation proviennent, notamment directement, de la saponification d'une huile végétale et/ou d'une huile animale. En général, cette saponification est réalisée par ajout d'une base, généralement de la soude, et permet d'éliminer les acides gras libres présents dans l'huile, lesquels se retrouvent dans la pâte de neutralisation (« soapstock » en anglais) sous forme de sels alcalins d'acides gras. Avant cette saponification, l'huile végétale et/ou animale peut subir une opération de dégommage ou démucilagination visant à éliminer les phospholipides, lécithines, complexes sucrés et autres impuretés. La séparation de l'huile et de la pâte de neutralisation résultant de la saponification peut être réalisée par centrifugation.

Les pâtes de neutralisation comprennent ainsi essentiellement des acides gras neutralisés par une base. Elles comprennent typiquement de 20 à 70% en poids d'acides gras.

En plus des acides gras neutralisés par une base, les pâtes de neutralisation peuvent contenir, selon leur origine et la qualité de la saponification, des phospholipides ou des mono-, di- ou tri-glycérides n'ayant pas réagi. Habituellement, les acides gras ont des chaînes carbonées en C₁₂-C₂₄, de préférence C₁₆-C₂₀ ou mieux C₁₆-C₁₈.

Une pâte de neutralisation est donc un produit issu de la biomasse. Des avantages associés à de telles pâtes de neutralisation résident, d'une part, sur leur bas coût de mise en œuvre, et, d'autre part, dans l'absence de substances toxiques indésirables, telles que les pesticides, les aflatoxines, les métaux lourds, les précurseurs de dioxines et furanes, les PCB et les nitrites.

Cependant, les pâtes de neutralisation peuvent contenir des proportions importantes d'eau provenant de la réaction de saponification ou de rajout d'eau pour la fluidification dans le process industriel. La phase aqueuse peut représenter plus de 50% de la masse de la pâte de neutralisation. Une autre difficulté est liée au fait qu'il s'agit selon les cas d'émulsions, qu'il convient de traiter de façon spécifique.

L'utilisation en tant que combustible nécessite par conséquent de mettre en œuvre des méthodes d'élimination de cette eau et autres résidus solides ou liquides visqueux indésirables.

### Etape a1) d'extraction

L'étape a1) d'extraction du procédé selon l'invention a pour fonction d'extraire les acides gras contenus dans la pâte de neutralisation. Cette extraction est réalisée en milieu acide dans des conditions efficaces pour former une phase aqueuse et une phase organique comprenant les acides gras initialement contenus dans la pâte de neutralisation.

Cette phase organique comprenant les acides gras est généralement appelée « huile acide », ou encore « huile de neutralisation ».

L'acide utilisé pour extraire les acides gras présents dans la pâte de neutralisation sous forme de sels est généralement un acide inorganique, tel que par exemple l'acide sulfurique, l'acide phosphorique ou l'acide chlorhydrique.

L'acide sulfurique est toutefois préféré car il permet une meilleure extraction des acides gras à un coût économique favorable.

L'extraction est généralement réalisée sous chauffage, à une température comprise entre 70 et 100°C (bornes incluses), de préférence entre 80 et 90°C (bornes incluses).

Afin d'obtenir une bonne extraction des acides gras, on maintient de préférence un pH acide le temps de la réaction, par exemple un pH inférieur ou égal à 6, de préférence inférieur ou égal à 4.

Le temps de réaction est choisi pour permettre une extraction de la totalité des acides gras. Il est par exemple de 1 heure à 24 heures, en fonction de la géométrie du réacteur, de la nature et de la composition de la charge à traiter.

L'extraction est de préférence réalisée sous agitation.

On obtient ainsi la formation d'une phase aqueuse et d'une phase organique contenant les acides gras.

### Etape a2) de séparation

Au cours de cette étape, on sépare la phase organique formée lors de l'étape a1) de la phase aqueuse. Autrement dit, on isole l'huile acide qui sera ultérieurement soumise à l'étape c) du procédé selon l'invention, optionnellement après une étape de centrifugation lorsque sa teneur en eau est supérieure à 1% mais inférieure ou égale à 3%.

Cette séparation peut être réalisée par distillation, décantation, voire centrifugation. Cette étape peut être mise en œuvre par tous dispositifs appropriés, connus et disponibles dans le commerce.

Avantageusement, cette séparation est réalisée par décantation, suivie d'une élimination de la phase aqueuse. La décantation dépend de la différence de densité des liquides et de leur viscosité, paramètres qui peuvent être modifiés de manière connue par l'homme de l'art pour favoriser la séparation le cas échéant.

Avantageusement, on peut réaliser une filtration à 150 µm de l'huile acide avant toute étape ultérieure.

### Etape b) de fourniture d'une composition à base de poix d'huile de tall

L'huile de tall, ou autrement dénommé tallol ou « tall oil » en anglais, est un sous-produit liquide du procédé Kraft de transformation du bois lequel permet d'isoler d'un côté la pulpe de bois utile pour l'industrie papetière, et de l'autre la liqueur noire contenant l'huile de tall brute. L'huile de tall est essentiellement obtenue lors de l'utilisation de conifères dans le procédé Kraft. Les produits issus de la distillation de l'huile de tall brute sont généralement utilisés comme bases dans l'industrie chimique et pour la fabrication de colles et adhésifs.

Au cours du procédé Kraft, les copeaux de bois sont habituellement chauffés en présence de sulfure de sodium en solution aqueuse. Ce traitement se fait en général à une température de 130 à 180°C, sous pression pendant 2 à 5 heures suivant l'essence du bois. On obtient une liqueur noire, et, après décantation on observe la formation d'une couche supérieure alcaline appelée savon (« tall oil soap » en anglais), qui peut être isolée. Ce savon d'huile de tall est ensuite acidifié, par exemple par de l'acide sulfurique, pour produire de l'huile de tall brute. L'huile de tall brute comprend principalement des acides résiniques, des acides gras et des composés non saponifiables.

Une acidification insuffisante peut conduire à une huile de tall brute contenant des sels métalliques, généralement de sodium. Cette caractéristique est liée au fait que l'huile de tall comprend majoritairement des composés hydrocarbonés fonctionnalisés par des acides organiques, essentiellement des acides carboxyliques, parfois des phénols. L'huile de tall comprend aussi des stérols non saponifiables, des alcools gras et d'autres dérivés d'hydrocarbures alkylés.

A noter que l'huile de tall n'est pas une huile acide car elle provient de la saponification non pas d'une huile végétale ou animale mais de la saponification d'une solution alcaline de matière organique solide (des copeaux de bois, notamment de conifères). Ainsi l'huile de tall contient des résines alors qu'une huile acide n'en contient pas.

Une huile de tall brute moyenne a un indice d'acide (TAN : total acid number, en mg de KOH par g de produit) compris entre 100 et 200, plus généralement entre 125 et 165.

Lorsqu'elle est chauffée, l'huile de tall brute peut être séparée (par distillation) en une phase légère, comprenant essentiellement des acides gras et des résines et une phase lourde ou résidu, qui ne peut être distillé, appelé poix d'huile de tall (« tall oil pitch » en anglais). La poix d'huile de tall contient une faible quantité d'acides gras et d'acides résiniques et une quantité notable d'insaponifiables.

L'étape b) peut ainsi comprendre :
b1) une étape de fourniture de poix d'huile de tall, notamment par fractionnement d'au moins une huile de tall brute obtenu par transformation de bois de conifère selon le procédé Kraft,
b2) une étape de mélange de la poix d'huile de tall obtenue à l'étape b1) avec au moins un solvant, par exemple choisi parmi de l'huile légère de pin et de l'essence de térébenthine. Ce mélange permet de rendre la poix d'huile de tall plus facilement manipulable et transportable.

Le mélange récupéré à l'étape b2) constitue une composition à base de poix d'huile de tall.

Notamment, la poix d'huile de tall correspond à la fraction non distillable de l'huile de tall brute.

Avantageusement, la composition à base de poix d'huile de tall fournie à l'étape b) comprend :
- de 50 à 90% massique de poix d'huile de tall, de préférence de 60 à 80% massique,
- et le complément à 100% d'un ou plusieurs solvants, optionnellement choisis parmi une huile légère de pin et l'essence de térébenthine.

### Etape c) de mélange

Au cours de cette étape, l'huile acide obtenue à l'étape a) et la composition à base de poix d'huile de tall obtenue à l'étape b) sont mélangées.

Avantageusement, afin d'améliorer l'homogénéité du mélange obtenu, cette étape est réalisée sous agitation, par exemple mécanique et/ou par recirculation.

Notamment, le mélange peut être effectué dans un réacteur sous agitation par injection simultanée de l'huile acide obtenue à l'étape a), optionnellement après au moins une étape de traitement d), et de la composition à base de poix d'huile de tall obtenue à l'étape b), optionnellement après au moins une étape de traitement d).

Afin de faciliter le mélange et d'améliorer son homogénéité, les composants du mélange peuvent être chauffés préalablement à leur mélange. Ce chauffage peut être effectué après une ou plusieurs étapes optionnelles de traitement d) d'un ou plusieurs des composants du mélange.

L'huile acide peut ainsi être chauffée à une température de 40 à 70°C et la composition à base de poix d'huile de tall peut être chauffée à une température de 40 à 70°C, de préférence de 50 à 60°C.

Au cours de cette étape c) de mélange, on mélange l'huile acide obtenue à l'étape a), optionnellement après au moins une étape de traitement d), et la composition à base de poix d'huile de tall obtenue à l'étape b), optionnellement après au moins une étape de traitement d), dans les proportions suivantes :
- de 30% à 90% massique d'huile acide,
- de 10 à 70% massique de la composition à base de poix d'huile de tall.

### Etape d) de traitement

Cette étape peut comprendre une ou plusieurs étapes choisie(s) parmi une filtration, une centrifugation et une décantation.

Le procédé selon l'invention peut comprendre au moins une étape de traitement d) de chaque composant du mélange (avant l'étape de mélange) et du mélange obtenu à l'étape c).

En variante, le procédé selon l'invention peut comprendre une ou plusieurs des étapes suivantes :
- une étape de traitement d) de l'huile acide obtenue à l'étape a) avant l'étape c) de mélange,
- une étape de traitement d) de la composition à base de poix d'huile de tall obtenue à l'étape b) avant l'étape c) de mélange,
- une étape de traitement d) du mélange obtenu à l'étape c).

Le procédé selon l'invention peut ainsi comprendre au moins une étape de traitement d) laquelle comprend :
d1) une étape de traitement dans laquelle on traite l'huile acide obtenue à l'étape a) avant l'étape c) de mélange dans des conditions efficaces pour obtenir une huile acide ayant une teneur en eau inférieure ou égale à 1 % poids, voire inférieure ou égale à 0,8% poids, en particulier de 0,1% à 0,7% en poids.

Cette étape d1) peut comprendre au moins une étape de centrifugation. La centrifugation peut avantageusement être réalisée sur une huile acide obtenue à l'étape a2) précédemment décrite.

Cette opération de centrifugation permet d'obtenir une huile acide présentant très avantageusement une teneur en eau inférieure ou égale à 1% en poids, voire inférieure ou égale à 0,8% en poids, en particulier de 0,1% à 0,7% en poids.

Outre l'élimination d'eau, récupérée dans une phase aqueuse, la centrifugation permet également l'élimination d'une partie des résidus solides en suspension.

L'étape de centrifugation présente l'avantage d'une mise en œuvre simplifiée, en évitant de recourir à des méthodes de séparation chimiques complexes, telles que distillation, lesquelles peuvent être contraignantes en termes de précautions et de corrosion indésirables, et onéreuses.

L'étape de centrifugation peut avantageusement être une centrifugation triphasique.

Toutefois, l'étape de centrifugation peut elle-même être une combinaison d'étapes, en particulier comprendre une première étape de centrifugation de type diphasique, qui permet de séparer les matières en suspension sous forme de boues, couplée à une deuxième étape de centrifugation triphasique, laquelle sépare la phase organique, la phase aqueuse épurée et les matières en suspension résiduelles de la première centrifugation. Cette étape peut être mise en œuvre par tous dispositifs appropriés, connus et disponibles dans le commerce.

Classiquement, la centrifugation peut être mise en œuvre avec des vitesses de 4000 - 6000 t/min.

La durée de la centrifugation dépend de la nature des espèces à séparer, de leur coefficient de partage, de la différence de densité entre la phase aqueuse, la phase organique huileuse et les particules, de la taille des particules, de la tension de surface des espèces à séparer, de la température, de la vitesse de centrifugation. La durée de séparation (appelée temps de séjour) est donc adaptée au cas par cas par l'homme de l'art par des moyens conventionnels de mesure et contrôle.

L'étape de traitement d) peut en outre comprendre une étape d2) de réduction de la teneur en cendres, soufre, phosphore, calcium, sodium et éventuellement en métaux alcalins autres que le sodium. Cette étape d2) est avantageusement réalisée sur l'huile acide obtenue à l'étape d1), mais pourrait éventuellement être réalisée sur une huile acide n'ayant pas subi l'étape d1).

Au cours de cette étape d2), on réduit la teneur en cendres, soufre, calcium, phosphore, sodium, et éventuellement en métaux alcalins autres que le sodium, de l'huile acide au moyen d'une ou plusieurs sous-étapes de filtration et/ou de précipitation.

Cette étape d2) peut être mise en œuvre par tous dispositifs appropriés, connus et disponibles dans le commerce.

La filtration peut ainsi être réalisée au moyen d'un filtre presse, ou d'un filtre cartouche, ou d'une membrane filtrante ou être une ultra filtration, une nano filtration ou encore une filtration par osmose inverse.

L'étape d2) peut avantageusement comprendre au moins une étape de filtration effectuée à l'aide d'au moins un passage à travers un filtre à cellulose. Un tel filtre à cellulose peut permettre d'améliorer l'efficacité de la filtration en évitant le colmatage.

L'étape de précipitation peut avantageusement être réalisée dans des conditions efficaces pour précipiter les sulfates présents dans l'huile acide. Ces sulfates peuvent provenir de la saponification de l'huile et/ou de l'extraction à l'acide des acides gras.

Sans vouloir être lié par une théorie, la précipitation des sulfates d'une huile acide semble associée à la précipitation du calcium, du phosphore, du sodium, et éventuellement des métaux alcalins autres que le sodium, ce qui pour a pour effet de diminuer la teneur en cendres du produit.

De manière générale, les conditions de réalisation de la précipitation seront déterminées par l'homme du métier par des moyens conventionnels en fonction des espèces à précipiter.

La précipitation des sulfates peut notamment être réalisée par ajout d'ions Ca²⁺, par exemple sous forme de CaCl₂ (chlorure de calcium).

Le choix et le nombre de ces sous-étapes pourra être déterminé aisément par l'homme du métier en contrôlant la teneur en cendres, soufre, calcium, phosphore et sodium de la phase organique finale, constituant l'huile acide.

Dans un mode de réalisation, l'étape d2) peut comprendre au moins deux étapes de filtration successives avec des filtres de maillage de plus en plus faible. A titre d'exemple, les filtrations peuvent être effectuées au moyen d'un premier filtre de 100 à 50 µm et d'un deuxième filtre de 10 à 25 µm. Ces filtrations sont de préférence réalisées à chaud :
- de 40 à 60°C pour les huiles acides,
- de 50 à 80°C pour la composition à base de poix d'huile de tall,
- de 50 à 80°C pour le mélange.

Dans un autre mode de réalisation, l'étape d2) peut comprendre une étape filtration suivie d'une étape de précipitation, notamment des sulfates.

Eventuellement ces étapes de filtration et de précipitation peuvent être précédées ou suivies d'une ou plusieurs autres étapes de filtration, voire d'une ou plusieurs étapes de précipitation. Avantageusement, la dernière étape peut être une étape de filtration.

Le procédé peut comprendre une succession de filtrations au moyen de filtres de mailles décroissantes pour atteindre la cible finale, par exemple partir de 200 µm jusqu'à 25 µm. Avantageusement, la dernière étape de filtration est alors réalisée au moyen d'un filtre présentant un seuil de filtration de 10 à 25 µm.

Grâce à cette étape d2), il est possible d'obtenir une huile acide présentant très avantageusement des teneurs en :
- cendres inférieure ou égale à 0,1% poids, idéalement inférieure à 0,05% poids,
- soufre inférieure ou égale à 150 mg/kg, de préférence inférieure à 100 mg/kg,
- calcium inférieure ou égale à 5 mg/kg, de préférence inférieure à 1 mg/kg,
- phosphore inférieure ou égale à 150 mg/kg,
- sodium inférieure ou égale à 10mg/kg, de préférence inférieure à 1 mg/kg,
et éventuellement une teneur en métaux alcalins autres que le sodium inférieure ou égale à 1 mg/kg.

La teneur en calcium pourra être mesurée selon la norme NF T 60106.

La teneur en phosphore pourra être mesurée selon la norme NF T 60106.

La teneur en sodium pourra être mesurée selon la norme NF T 60106.

La teneur en métaux alcalins autres que le sodium pourra être mesurée selon la norme NF T 60106.

On notera que les étapes d1) et d2) peuvent permettre d'obtenir des huiles acides dont les teneurs en cendres, soufre, calcium, phosphore, sodium et éventuellement en métaux alcalins autres que le sodium sont très inférieures aux seuils précités, voire nulles ou quasiment nulles et indétectables par les moyens de quantification usuels.

En outre, l'huile acide alors obtenue à l'étape d2) présente avantageusement une teneur en eau inférieure ou égale à 1%, voire inférieure ou égale à 0,8%, en particulier de 0,1% à 0,7% en poids.

Le procédé selon l'invention peut également comprendre, en variante ou en combinaison, au moins une étape de traitement d) choisie parmi :
- une étape d'1) de traitement de la composition obtenue à l'étape b) avant l'étape c) de mélange et
- une étape d3) de traitement du mélange obtenu à l'étape c).

Ces étapes d'1) et d3) peuvent comprendre une ou plusieurs étapes choisie(s) parmi une filtration, une centrifugation et une décantation. Ces étapes peuvent être similaires aux étapes d1) et d2) précédemment décrites. Notamment, chacune des étapes d'1) et d3) peut comprendre, ou consister en une ou plusieurs filtrations, décantations, précipitations, notamment dans des conditions similaires à celles décrites pour l'huile acide, éventuellement à des températures différentes, telles que celles mentionnées plus haut pour la filtration.

### EXEMPLES

Dans la présente demande, les termes « poids » et « masse » ont été utilisés indifféremment pour désigner une masse.

### Exemple 1

Le tableau 1 rassemble quelques caractéristiques physico-chimiques d'un échantillon de poix d'huile de tall.

Le tableau 2 rassemble les mêmes caractéristiques physico-chimiques pour les produits suivants :
- Produit A : composition à base de poix d'huile de tall dont les caractéristiques figurent dans le tableau 1,
- Produit B : huile acide,
- Produit C : fioul TBTS (Très Basse Teneur en Soufre), non additivé,
- Produit D : composition combustible selon l'invention constituée de 26% poids de produit A et de 74% poids de produit B.

**Tableau 1**

| | Poix d'huile de tall | Unités |
|---|---|---|
| Masse volumique à 15°C | 1009,7 | *kg*/*m³* |
| NF EN ISO 3675 | | |
| Viscosité à 100°C | 154 | *cSt* |
| NF EN ISO 3104 | | |
| Teneur en soufre | 0,4 | *%poids* |
| NF EN ISO 20846 | | |
| Point éclair | >200 | °*C* |
| NF EN ISO 2719 | | |
| Teneur en eau | 0,1 | *%poids* |
| NF EN ISO 12937 | | |
| PCI (*) | 37 | *MJ*/*kg* |
| Teneur en Azote | 0,17 | %*m* |
| ATSM D 3228 | | |
| Teneur en cendres | >0,1 | %*m* |
| NF EN ISO 6245 | | |
| Indice d'acide | 48 | *mgKOH*/*g* |
| ASTM D664A | | |

| | | |
|---|---|---|
| (*) Mesure réalisée selon la méthode de l'Union Française des Industries Pétrolière (UFIP) et l'Association Technique Energie Environnement (ATEE). | | |

Le produit A comprend 60% poids de poix d'huile de tall et 40% poids de solvant, à savoir : 10% poids d'huile de pin et 30% poids d'essence de térébenthine. Le produit A est stocké à une température de 40 à 70°C.

L'huile acide utilisée ici est une huile acide issue de l'acidification d'une pâte de neutralisation obtenue par saponification d'une huile de colza. La pâte de neutralisation a subi le traitement suivant :
a1) injection de 1201 d'acide sulfurique à 97% dans un réacteur contenant 4000kg de pâte de neutralisation, où la température est de 80 à 90°C. Le temps de réaction est de 24 heures, sous contrôle en continu du pH afin de maintenir le pH à une valeur inférieure à 4,
a2) décantation de la phase aqueuse et de la phase organique formées au cours de l'étape a1) puis élimination de la phase aqueuse.
On obtient une huile acide qui est soumise à des filtrations successives à chaud (50°C) au moyen de filtres de maillages décroissants (200, 100, 50 et 25µm). On obtient le produit B, lequel est stocké à une température de 5 à 40°C.

Le produit D est un mélange des produits A et B. Il est réalisé de la manière suivante :
24 heures avant le mélange, le produit B est chauffé entre 50 et 60°C et agité (agitation mécanique et recirculation à un débit supérieur à (V_{produit stocké} / 5) m³/h). Le mélange est réalisé par injection simultanée de 74% poids de produit B (huile acide) et de 26% poids de produit A (à base de poix d'huile de tall). On obtient le produit D. A l'issue de l'opération, le produit D est agité (agitation mécanique et recirculation à un débit supérieur à (V_{produit stocké}/5) m³/h) pendant 24 heures. Le produit D est ensuite stocké à une température facilitant son transfert en fonction de la viscosité, de préférence supérieure à 20°C.

**Tableau 2**

| Produit | D (26% A + 74% B) Invention | A | B | C | *Unités* |
|---|---|---|---|---|---|
| Masse volumique à 15°C | 944 | 986 | 924 | 940 à 1050 typique | *kg*/*m³* |
| Viscosité à 100°C | 8,5 | 10,9 | 7,6 | <40 (*) | *cSt* |
| Teneur en soufre | 0,09 | 0,24 | <0,01 | <1 (*) | *%poids* |
| Point éclair | 121 | 91 | >200 | >70 (*) | °*C* |
| Teneur en eau | 0,2 | 0,1 | 0,7 | <0,6 (*) | *%poids* |
| PCI | 37 | 39 | 36 | 39 typique | *MJ*/*kg* |
| Teneur en Azote | 0,02 | 0,07 | 0,01 | 0,35 | *%m* |
| Teneur en cendres | 0,013 | 0,058 | 0,006 | 0,04 | *%m* |
| Indice d'acide | 40 | 76 | 100 | | *mgKOH*/*g* |

| | | | | | |
|---|---|---|---|---|---|
| (*) : spécifications imposées par la CSR 500 pour un fioul lourd. Ces spécifications sont établies par la Chambre Syndicale du Raffinage en France. | | | | | |

Les normes utilisées pour les mesures des différents produits sont précisées dans le tableau 1 uniquement.

### Exemple 2: Essai pilote de combustion

Chaque combustible est brûlé séparément dans une chaudière à tubes de fumées de 1 MW, 1 brûleur à pulvérisation mécanique sans assistance. Les émissions atmosphériques sont analysées en continu au moyen d'analyseurs placés dans le conduit d'évacuation des fumées, en sortie de foyer.

**Tableau 3**

| **Produits** | **D (invention)** | **A** | **B** | **C** | *Unités* |
|---|---|---|---|---|---|
| Température de gavage | 70 | 70 | 70 | 65 | °*C* |
| Pression de gavage | 2 | 2 | 2 | 2 | *bars* |
| Température de pulvérisation | 85 | 93 | 90 | 136 | °*C* |
| Pression de pulvérisation | 32 | 32 | 28 | 30 | *bars* |
| Rendement de combustion | 95,8 | 94,8 | 94,3 | 95,5 | % |
| Emission CO | 0 | 0 | 1 | 6 | *mg*/*m³(n)* |
| NF EN 15058 | | | | | |
| Emissions SO₂ | 158 | 432 | 97 | 1511 | *mg*/*m³(n)* |
| NF EN 14791 | | | | | |
| Emissions NOx | 149 | 189 | 169 | 631 | *mg*/*m³(n)* |
| NF EN 14792 | | | | | |
| Emissions poussières | 14 | 35 | 16 | 102 | *mg*/*m³(n)* |
| NF EN 13284-1 | | | | | |

| | | | | | |
|---|---|---|---|---|---|
| m³ (n) : mètres cubes normaux, mesurés à P=101.3kPa et T=273K | | | | | |

Les produits suivants ont été testés :
- Produit A : composition à base de poix d'huile de tall,
- Produit B : huile acide,
- Produit C : fioul TBTS non additivé,
- Produit D : composition selon l'invention constituée de 26% poids de la composition à base de poix d'huile de tall et de 74% poids de l'huile acide,
Les caractéristiques de ces produits sont celles présentées dans le tableau 2.

Le tableau 3 ci-dessus rassemble les conditions de combustion de cet essai ainsi que le rendement de combustion et les émissions mesurées. La combustion de la composition selon l'invention (D) présente un rendement similaire à celle du fioul lourd (A) et légèrement supérieur à chaque constituant de la composition pris séparément (A et B).
Les émissions atmosphériques de la composition selon l'invention (D) sont dans les mêmes ordres de grandeur que pour l'huile acide seule (B) et permettent de respecter les VLE (Valeurs Limites d'Emission) nouvellement entrées en vigueur, ce qui n'est pas le cas pour la composition à base de poix d'huile de tall (A) et le fioul lourd TBTS (C). On note que les émissions de NOx et de poussières de la composition selon l'invention sont inférieures aux émissions des autres produits, une baisse conséquente étant observée pour les NOx.

### Exemple 3 : Essai de stabilité

Généralement, l'utilisation d'un combustible dans les installations de combustion implique au préalable un stockage en cuve. La durée de stockage peut varier de plusieurs jours à plusieurs mois. Des essais de stabilité ont été réalisés afin de vérifier l'homogénéité d'une composition selon l'invention dans le temps.
La composition combustible (produit D) des exemples 1 et 2 a été stockée à 20°C, sous exposition à la lumière du jour pendant 5 mois. Le tableau 4 rassemble les résultats observés.
On constate que la composition combustible selon l'invention présente des propriétés physiques constantes dans le temps. La composition combustible reste notamment homogène, même après plusieurs mois.

**Tableau 4**

| | | | |
|---|---|---|---|
| | **D (invention)** | | |
| | **B (Huile acide)** | 74% poids | |
| | **A** | 26% poids | |
| | **Durée** | t = 0 | t = 5 mois |
| **viscosité à 50°C** | | | |
| NF EN ISO 3104 | ***cSt*** | 40,77 | 39,37 |
| **viscosité à 100°C** | ***cSt*** | 10,46 | 10,23 |
| **point écoulement** | | | |
| ASTM D97 -NFT 60105 | °**C** | -15 | -15 |
| **aspect visuel** | ***5 min*** | foncé sans matière en suspension | |
| | ***1 mois*** | limpide | |
| | ***2 mois*** | limpide | |
| | ***3 mois*** | limpide | |
| | ***4 mois*** | limpide | |
| | ***5 mois*** | limpide | |

La composition combustible selon l'invention présente ainsi les avantages suivants :
- Environnemental : la composition combustible selon l'invention contient peu d'azote, de soufre et de cendres par rapport à un fioul lourd, ce qui permet de diminuer fortement les émissions de NOx, SO₂ et poussières à l'atmosphère et ainsi de respecter les VLE (Valeurs Limites d'Emission), que ce soit pour les petites, moyennes et grandes installations de combustion, sans avoir recours à un post traitement des fumées. A noter qu'une composition à base de poix d'huile de tall seule ne peut pas non plus être utilisée sans mise en œuvre d'un post traitement des fumées en respectant les VLE à l'émission (principalement pour le SO₂ et les poussières).
- Mise en œuvre : la composition combustible selon l'invention nécessite un réchauffage moindre qu'un fioul lourd : 20°C au stockage, brûleur coupelle rotative 55°C, brûleur pulvérisation mécanique 85°C (respectivement 55°C, 85°C et 130°C pour un fioul lourd), il en résulte un gain économique.
- Au stockage : la composition combustible selon l'invention a un indice d'acide inférieur à celui d'une huile acide seule et une teneur en eau réduite. La conjonction de ces deux éléments favorise les conditions de stockage. Du fait de la moindre présence d'eau, l'accumulation d'eau en fond de bac de stockage sera réduite d'autant. Cette eau étant moins acide, les potentiels phénomènes de corrosion seront donc atténués/ralentis. En outre, les vapeurs potentiellement formées dans le ciel gazeux présenteront un caractère moins corrosif que celles de l'huile acide seule. Enfin, la composition combustible selon l'invention présente un point éclair supérieur à celui d'une composition à base de poix d'huile de tall seule. La mise en œuvre du mélange, du stockage jusqu'au brûleur, se fait ainsi à une température inférieure au point éclair. Il en résulte qu'aucune ATEX (ATmosphère EXplosive) n'est induite par ce combustible ainsi qu'un gain économique.
- Au brûlage : la composition selon l'invention a une masse volumique et un PCI supérieurs à l'huile acide seule. Il en résulte qu'à travers un équipement de type volumique donné (pompe), il passera une plus grande masse de produit. Attendu que le pouvoir calorifique du mélange est supérieur à celui de l'huile acide seule, la puissance délivrable par l'installation de combustion s'en trouve augmentée. A titre indicatif, en lien avec les analyses de combustible (cf tableau 2), pour une installation de combustion donnée, la puissance thermique délivrée par le mélange sera supérieure à celle de l'huile acide seule de 5%.
- la composition combustible selon l'invention ne présente plus l'odeur caractéristique et forte de la poix d'huile de tall.

## Revendications

1. Composition combustible liquide, comprenant :
- de 30 à 90% massique d'une huile acide issue de l'acidification d'une pâte de neutralisation obtenue par un procédé de saponification d'une ou plusieurs huiles choisies parmi une huile végétale et une huile animale, et
- de 10 à 70% massique d'une composition comprenant de la poix d'huile de tall, cette composition comprenant de 50 à 90% massique de la poix d'huile de tall, et le complément à 100% d'un ou plusieurs solvants.

2. Composition combustible selon la revendication 1, comprenant un ou plusieurs additifs.

3. Composition combustible selon la revendication 1 ou 2, dans laquelle l'huile acide comprend une teneur en eau inférieure ou égale à 1% poids, voire inférieure ou égale à 0,8% poids, en particulier de 0,1% à 0,7% en poids.

4. Composition combustible selon l'une quelconque des revendications 1 à 3, dans laquelle l'huile acide comprend une teneur en :
• cendres inférieure ou égale à 0,1% poids,
• soufre inférieure ou égale à 150 mg/kg,
• calcium inférieure ou égale à 5 mg/kg,
• phosphore inférieure ou égale à 150 mg/kg,
• sodium inférieure ou égale à 10mg/kg.

5. Composition combustible selon l'une quelconque des revendications 1 à 4, dans laquelle le ou les solvants de la composition comprenant de la poix d'huile de tall sont choisis parmi une huile légère de pin et l'essence de térébenthine.

6. Composition combustible selon l'une quelconque des revendications 1 à 5 comprenant au moins une des caractéristiques suivantes :
- un point éclair supérieur ou égal à 100°C, de préférence supérieur ou égale à 110°C,
- un indice d'acide inférieur ou égal à 70mgKOH/g, de préférence inférieur ou égale à 60mgKOH/g, préférentiellement inférieur ou égal à 50mgKOH/g,
- une teneur en cendres inférieure ou égale à 0,1% poids, de préférence inférieure ou égale à 0,05% poids,
- une teneur en soufre inférieure ou égale à 0,5% poids, de préférence inférieure ou égale à 0,1% poids,
- une teneur en azote inférieure ou égale à 0,1% poids, de préférence inférieure ou égale à 0,05% poids.
- une teneur en eau inférieure ou égale à 0,5% poids, de préférence inférieure ou égale à 0,2% poids.

7. Procédé de préparation d'une composition combustible liquide issue de la biomasse comprenant :
a) une étape de fourniture d'une huile acide issue de l'acidification d'une pâte de neutralisation obtenue par un procédé de saponification d'une ou plusieurs huiles choisies parmi une huile végétale et une huile animale,
b) une étape de fourniture d'une composition comprenant de la poix d'huile de tall, comprenant :
b1) une étape de fourniture de 50 à 90% massique de poix d'huile de tall,
b2) une étape de mélange de la poix d'huile de tall obtenue à l'étape b1) avec au moins un solvant pour obtenir le complément à 100%,
c) une étape de mélange de 30 à 90% massique de l'huile acide obtenue à l'étape a) avec 10 à 70% massique de la composition obtenue à l'étape b),
d) optionnellement au moins une étape de traitement comprenant une ou plusieurs étapes choisie(s) parmi une filtration, une centrifugation et une décantation, dans laquelle on traite une substance choisie parmi l'huile acide obtenue à l'étape a) avant l'étape c) de mélange, la composition comprenant de la poix d'huile de tall obtenue à l'étape b) avant l'étape c) de mélange et le mélange obtenu à l'étape c).

8. Procédé de préparation selon la revendication 7, **caractérisé en ce qu'**il comprend au moins une étape de traitement d) laquelle comprend :
d1) une étape de traitement traite l'huile acide obtenue à l'étape a) avant l'étape c) de mélange dans des conditions efficaces pour obtenir une huile acide ayant une teneur en eau inférieure ou égale à 1 % poids, voire inférieure ou égale à 0,8% poids, en particulier de 0,1% à 0,7% en poids.
d2) optionnellement, une étape de réduction de la teneur en cendres, soufre, phosphore, calcium et sodium de l'huile acide obtenue à l'étape d1), cette étape de réduction comprenant une ou plusieurs sous étapes choisie(s) parmi une filtration et une précipitation, réalisée(s) dans des conditions efficaces pour obtenir une huile acide combustible comprenant une teneur en
• cendres inférieure ou égale à 0,1% poids, idéalement inférieure à 0,05% poids,
• soufre inférieure ou égale à 150 mg/kg, de préférence inférieure à 100 mg/kg,
• calcium inférieure ou égale à 5 mg/kg, de préférence inférieure à 1 mg/kg,
• phosphore inférieure ou égale à 150 mg/kg,
• sodium inférieure ou égale à 10mg/kg, de préférence inférieure à 1 mg/kg.

9. Procédé de préparation selon l'une quelconque des revendications 7 ou 8, **caractérisé en ce qu'**il comprend au moins une étape de traitement d) de la composition obtenue à l'étape b) avant l'étape c) de mélange.

10. Procédé de préparation selon l'une quelconque des revendications 7 à 9, **caractérisé en ce qu'**il comprend au moins une étape de traitement d) du mélange obtenu à l'étape c).

11. Procédé de préparation selon l'une quelconque des revendications 7 à 10, **caractérisé en ce que**, préalablement à l'étape de mélange, l'huile acide obtenue à l'étape a), optionnellement après au moins une étape de traitement d), est chauffée à une température de 40 à 70°C, et la composition comprenant de la poix d'huile de tall obtenue à l'étape b), optionnellement après au moins une étape de traitement d), est chauffée à une température de 40 à 70°C, de préférence de 50 à 60°C.

12. Procédé de préparation selon l'une quelconque des revendications 7 à 11, **caractérisé en ce que**, au cours de l'étape de mélange c), le mélange est effectué dans un réacteur sous agitation par injection simultanée de l'huile acide obtenue à l'étape a), optionnellement après au moins une étape de traitement d), et de la composition comprenant de la poix d'huile de tall obtenue à l'étape b), optionnellement après au moins une étape de traitement d).

13. Procédé de préparation selon l'une quelconque des revendications 7 à 12, dans lequel l'étape a) de fourniture d'une huile acide comprend :
a1) une étape d'extraction des acides gras présents dans une pâte de neutralisation issue du raffinage d'une ou plusieurs huiles choisie(s) parmi une huile végétale et/ou une huile animale, cette étape d'extraction étant réalisée en milieu acide dans des conditions efficaces pour former une phase aqueuse et une phase organique comprenant lesdits acides gras,
a2) une étape de séparation au cours de laquelle on sépare ladite phase organique précédemment formée et on la récupère,
la phase organique récupérée à l'étape a2) constituant l'huile acide.

14. Procédé de combustion d'un combustible dans une installation de combustion, dans laquelle on brûle une composition combustible selon l'une quelconque des revendications 1 à 6 ou un combustible directement obtenu par le procédé selon l'une quelconque des revendications 7 à 13.

## Patentansprüche

1. Brennbare flüssige Zusammensetzung, umfassend:
- von 30 bis 90 Masse-% eines sauren Öls, aus der Versauerung einer Neutralisierungspaste stammend, die durch ein Verseifungsverfahren eines oder mehrerer Öle erhalten wird, die aus einem pflanzlichen Öl und einem tierischen Öl ausgewählt werden, und
- von 10 bis 70 Masse-% einer Zusammensetzung, Tallölpech umfassend, wobei diese Zusammensetzung von 50 bis 90 Masse-% von dem Tallölpech umfasst, und die Ergänzung auf 100% von einem oder mehreren Lösungsmitteln.

2. Brennbare Zusammensetzung nach Anspruch 1, ein oder mehrere Additive umfassend.

3. Brennbare Zusammensetzung nach Anspruch 1 oder 2, wobei das saure Öl einen Gehalt an Wasser kleiner oder gleich 1 Gew.-%, oder gar 0,8 Gew.-%, im Besonderen von 0,1 Gew.-% bis 0,7 Gew.-% umfasst.

4. Brennbare Zusammensetzung nach einem der Ansprüche 1 bis 3, wobei das saure Öl einen Gehalt umfasst an:
• Asche kleiner oder gleich 0,1 Gew.-%,
• Schwefel kleiner oder gleich 150 mg/kg,
• Kalzium kleiner oder gleich 5 mg/kg,
• Phosphor kleiner oder gleich 150 mg/kg,
• Natrium kleiner oder gleich 10 mg/kg.

5. Brennbare Zusammensetzung nach einem der Ansprüche 1 bis 4, wobei das oder die Lösungsmittel der Zusammensetzung, die Tallölpech umfasst, aus einem leichten Kiefernöl und Terpentinöl ausgewählt werden.

6. Brennbare Zusammensetzung nach einem der Ansprüche 1 bis 5, mindestens eines der folgenden Merkmale umfassend:
- einen Flammpunkt größer oder gleich 100°C, vorzugsweise größer oder gleich 110°C,
- einen Säurewert kleiner oder gleich 70mgKOH/g, vorzugsweise kleiner oder gleich 60mgKOH/g, vorzugsweise kleiner oder gleich 50mgKOH/g,
- einen Aschegehalt kleiner oder gleich 0,1 Gew.-%, vorzugsweise kleiner oder gleich 0,05 Gew.-%,
- einen Schwefelgehalt kleiner oder gleich 0,5 Gew.-%, vorzugsweise kleiner oder gleich 0,1 Gew.-%,
- einen Stickstoffgehalt kleiner oder gleich 0,1 Gew.-%, vorzugsweise kleiner oder gleich 0,05 Gew.-%,
- einen Wassergehalt kleiner oder gleich 0,5 Gew.-%, vorzugsweise kleiner oder gleich 0,2 Gew.-%.

7. Verfahren zur Herstellung einer brennbaren flüssigen Zusammensetzung, die aus der Biomasse stammt, umfassend:
a) einen Schritt des Bereitstellens eines sauren Öls, aus der Versauerung einer Neutralisierungspaste stammend, die durch ein Verseifungsverfahren eines oder mehrerer Öle erhalten wird, die aus einem pflanzlichen Öl und einem tierischen Öl ausgewählt werden,
b) einen Schritt des Bereitstellens einer Zusammensetzung, Tallölpech umfasssend, Folgendes umfassend:
b1) einen Schritt des Bereitstellens von 50 bis 90 Masse-% an Tallölpech,
b2) einen Schritt des Mischens des in Schritt b1) erhaltenen Tallölpechs mit mindestens einem Lösungsmittel, um die die Ergänzung auf 100% zu erhalten,
c) einen Schritt des Mischens von 30 bis 90 Masse-% des im Schritt a) erhaltenen sauren Öls mit 10 bis 70 Masse-% der im Schritt b) erhaltenen Zusammensetzung,
d) optional mindestens einen Behandlungsschritt, umfassend einen oder mehrere Schritte, ausgewählt aus einem Filtern, einem Zentrifugieren, einem Dekantieren, wobei man eine Substanz behandelt, die aus dem im Schritt a) vor dem Schritt c) des Mischens erhaltenen sauren Öl, der im Schritt b) vor dem Schritt c) des Mischens erhaltenen Tallölpech umfassenden Zusammensetzung und der in Schritt c) erhaltenen Mischung ausgewählt wird.

8. Verfahren zur Herstellung nach Anspruch 7, **dadurch gekennzeichnet, dass** es mindestens einen Behandlungsschritt d) umfasst, welcher Folgendes umfasst:
d1) einen Behandlungsschritt, der das im Schritt a) erhaltene saure Öl vor dem Schritt c) des Mischens unter wirksamen Bedingungen behandelt, um ein saures Öl zu erhalten, das einen Wassergehalt kleiner oder gleich 1 Gew.-%, oder gar 0,8 Gew.-%, im Besonderen 0,1 Gew.-% bis 0,7 Gew.-% aufweist.
d2) optional einen Reduzierungsschritt des Gehalts an Asche, Schwefel, Phosphor, Kalzium und Natrium des im Schritt d1) erhaltenen sauren Öls, wobei dieser Reduzierungsschritt einen oder mehrere Unterschritte umfasst, die aus einem Filtern und einem Ausfällen ausgewählt werden, die unter wirksamen Bedingungen durchgeführt werden, um ein brennbares saures Öl zu erhalten, das einen Gehalt umfasst an
• Asche kleiner oder gleich 0,1 Gew.-%, idealerweise kleiner als 0,05 Gew.-%,
• Schwefel kleiner als 150 mg/kg, vorzugsweise kleiner oder gleich 100 mg/kg,
• Kalzium kleiner oder gleich 5 mg/kg, vorzugsweise kleiner als 1 mg/kg,
• Phosphor kleiner oder gleich 150 mg/kg,
• Natrium kleiner oder gleich 10 mg/kg, vorzugsweise kleiner als 1 mg/kg.

9. Verfahren zur Herstellung nach einem der Ansprüche 7 oder 8, **dadurch gekennzeichnet, dass** es mindestens einen Behandlungsschritt d) der im Schritt b) erhaltenen Zusammensetzung vor dem Schritt c) des Mischens umfasst.

10. Verfahren zur Herstellung nach einem der Ansprüche 7 bis 9, **dadurch gekennzeichnet, dass** es mindestens einen Bearbeitungsschritt d) der im Schritt c) erhaltenen Mischung umfasst.

11. Verfahren zur Herstellung nach einem der Ansprüche 7 bis 10, **dadurch gekennzeichnet, dass** vor dem Schritt des Mischens, das im Schritt a) erhaltene saure Öl optional nach mindestens einem Behandlungsschritt d) auf eine Temperatur von 40 bis 70°C erhitzt wird, und die im Schritt b) erhaltenes Tallölpech umfassende Zusammensetzung optional nach mindestens einem Behandlungsschritt d) auf eine Temperatur von 40 bis 70°C, vorzugsweise von 50 bis 60°C erhitzt wird.

12. Verfahren zur Herstellung nach einem der Ansprüche 7 bis 11, **dadurch gekennzeichnet, dass** im Laufe des Mischungsschritts c) die Mischung in einem Reaktor unter Schütteln durch gleichzeitiges Injizieren des im Schritt a) erhaltenen sauren Öls, optional nach mindestens einem Behandlungsschritt d), und der im Schritt b) erhaltenen Tallölpech umfassenden Zusammensetzung, optional nach mindestens einem Behandlungsschritt d), durchgeführt wird.

13. Verfahren zur Herstellung nach einem der Ansprüche 7 bis 12, wobei der Schritt a) des Bereitstellens eines sauren Öls umfasst:
a1) einen Schritt des Extrahierens der in einer Neutralisierungspaste, die aus dem Raffinieren eines oder mehrerer Öle, die aus einem pflanzlichen Öl und/ oder einem tierischen Öl ausgewählt werden, stammt, vorhandenen Fettsäuren, wobei dieser Schritt des Extrahierens im sauren Milieu unter wirksamen Bedingungen durchgeführt wird, um eine wässrige Phase und eine organische Phase zu bilden, die die Fettsäuren umfassen,
a2) einen Schritt des Trennens, im Laufe dessen man die zuvor gebildete organische Phase trennt, und diese wiedergewinnt,
wobei die im Schritt a2) wiedergewonnene organische Phase das saure Öl bildet.

14. Verfahren zum Verbrennen eines Kraftstoffs in einer Verbrennungsanlage, in der man eine brennbare Zusammensetzung nach einem der Ansprüche 1 bis 6 oder einen direkt durch das Verfahren nach einem der Ansprüche 7 bis 13 erhaltenen Kraftstoff verbrennt.

## Claims

1. Liquid fuel composition, comprising:
- from 30 to 90% by weight of an acid oil coming from the acidification of a neutralisation paste obtained by a method of saponifying one or more oils selected from a vegetable oil and an animal oil, and
- from 10 to 70% by weight of a composition comprising tall oil pitch, this composition comprising from 50 to 90% by weight of tall oil pitch, and the complement to 100% of one or more solvents.

2. Fuel composition according to claim 1, comprising one or more additives.

3. Fuel composition according to claim 1 or 2, wherein the acid oil comprises a content in water less than or equal to 1% by weight, or even less than or equal to 0.8% by weight, in particular from 0.1% to 0.7% by weight.

4. Fuel composition according to any of claims 1 to 3, wherein the acid oil comprises a content in:
• ash less than or equal to 0.1% by weight,
• sulphur less than or equal to 150 mg/kg,
• calcium less than or equal to 5 mg/kg,
• phosphorus less than or equal to 150 mg/kg,
• sodium less than or equal to 10 mg/kg.

5. Fuel composition according to any of claims 1 to 4, wherein the one or more solvents of the composition comprising tall oil pitch are selected from a light pine oil and turpentine oil.

6. Fuel composition according to any of claims 1 to 5 comprising at least one of the following characteristics:
- a flash point greater than or equal to 100°C, more preferably greater than or equal to 110°C,
- an acid value less than or equal to 70mgKOH/g, preferably less than or equal to 60mgKOH/g, preferentially less than or equal to 50mgKOH/g,
- a content in ash less than or equal to 0.1% by weight, more preferably less than or equal to 0.05% by weight,
- a content in sulphur less than or equal to 0.5% by weight, more preferably less than or equal to 0.1% by weight,
- a content in nitrogen less than or equal to 0.1% by weight, more preferably less than or equal to 0.05% by weight.
- a content in water less than or equal to 0.5% by weight, more preferably less than or equal to 0.2% by weight.

7. Method for preparing a biomass liquid fuel composition comprising:
a) a step of providing an acid oil coming from the acidification of a neutralisation paste obtained by a method of saponifying one or more oils selected from a vegetable oil and an animal oil,
b) a step of providing a composition comprising tall oil pitch, comprising:
b1) a step of providing from 50 to 90% by weight of tall oil pitch,
b2) a step of mixing the tall oil pitch obtained in step b1) with at least one solvent to obtain the complement to 100%,
c) a step of mixing from 30 to 90% by weight of the acid oil obtained in step a) with 10 to 70% by weight of the composition obtained in step b),
d) optionally at least one treatment step comprising one or more steps selected from a filtration, a centrifugation and a decantation, wherein a substance is treated selected from the acid oil obtained in step a) before step c) of mixing, the composition comprising the tall oil pitch obtained in step b) before step c) of mixing and the mixture obtained in step c).

8. Method for preparing according to claim 7, **characterised in that** it comprises at least one treatment step d) which comprises:
d1) a treatment step treats the acid oil obtained in step a) before step c) of mixing in conditions effective to obtain an acid oil that has a content in water less than or equal to 1% by weight, or even less than or equal to 0.8% by weight, in particular from 0.1% to 0.7% by weight.
d2) optionally, a step of reducing the content in ash, sulphur, phosphorus, calcium and sodium of the acid oil obtained in step d1), this step of reducing comprising one or more substeps selected from a filtration and a precipitation, carried out in conditions effective to obtain a combustible acid oil comprising a content of
• ash less than or equal to 0.1% by weight, ideally less than 0.05% by weight,
• sulphur less than or equal to 150 mg/kg, preferably less than 100 mg/kg,
• calcium less than or equal to 5 mg/kg, preferably less than 1 mg/kg,
• phosphorus less than or equal to 150 mg/kg,
• sodium less than or equal to 10 mg/kg, preferably less than 1 mg/kg.

9. Method for preparing according to any of claims 7 or 8, **characterised in that** it comprises at least one treatment step d) of the composition obtained in step b) before step c) of mixing.

10. Method for preparing according to any of claims 7 to 9, **characterised in that** it comprises at least one treatment step d) of the mixture obtained in step c).

11. Method for preparing according to any of claims 7 to 10, **characterised in that**, prior to the step of mixing, the acid oil obtained in step a), optionally after at least one treatment step d), is heated to a temperature from 40 to 70°C, and the composition comprising the tall oil pitch obtained in step b), optionally after at least one treatment step d), is heated to a temperature from 40 to 70°C, preferably from 50 to 60°C.

12. Method for preparing according to any of claims 7 to 11, **characterised in that**, during the step of mixing c), the mixture is carried out in a reactor under stirring by simultaneous injection of the acid oil obtained in step a), optionally after at least one treatment step d), and of the composition comprising the tall oil pitch obtained in step b), optionally after at least one treatment step d).

13. Method for preparing according to any of claims 7 to 12, wherein step a) of providing an acid oil comprises:
a1) a step of extracting fatty acids present in a neutralisation paste coming from the refining of one or more oils selected from a vegetable oil and/or an animal oil, this step of extracting being carried out in an acid medium in conditions effective for forming an aqueous phase and an organic phase comprising said fatty acids,
a2) a step of separating during which said previously-formed organic phase is separated and it is recovered,
the organic phase recovered in step a2) forming the acid oil.

14. Method for combusting a fuel in a fuel installation, wherein a fuel composition is burnt according to any of claims 1 to 6 or a fuel directly obtained by the method according to any of claims 7 to 13.
